# EUROPEAN PATENT APPLICATION

(11) **EP 4 815 115 A1**
(43) Date of publication of application: **30.09.2026**
(21) Application number: 26166985.7
(22) Date of filing: 24.03.2026
(51) Int. Cl.: H01M 10/653, H01M 50/204, H01M 50/293

(54) **POWER STORAGE DEVICE**

(30) Priority: 26.03.2025 JP 2025052552
(71) Applicant: Toyota Jidosha Kabushiki Kaisha, Toyota-shi, Aichi-ken 471-8571 (JP)
(72) Inventor: MATSUI, Takaaki, Toyota-shi, Aichi-ken, 471-8571 (JP); KATSUMOTO, Taichi, Toyota-shi, Aichi-ken, 471-8571 (JP); KOKUBO, Akinori, Toyota-shi, Aichi-ken, 471-8571 (JP)
(74) Representative: TBK

(57) **Abstract**

A battery pack 20 includes at least one battery cell 43 that includes a cell case 44, a battery case 22 that accommodates the at least one battery cell 43, and a heat conductive material that is adhered to a bottom plate portion 45, which is a bottom portion of the cell case 44, and to a bottom plate portion 26, which is a bottom portion of the battery case 22, and that has a Young's modulus that is smaller than a Young's modulus of the cell case. The bottom plate portion 26 of the battery case 22 includes ribs 49. The heat conductive material is adhered to the ribs 49.

## Description

### BACKGROUND

### Technical Field

The present disclosure relates to a power storage device.

### Related Art

Japanese Patent Application Laid-Open (JP-A) No. 2024-114439 discloses a battery pack having a battery module including plural battery cells stacked in a predetermined direction, and a battery case accommodating the battery module.

A bottom portion of the battery case and bottom portions of the respective battery cells may be fixed to each other via a heat conductive material, which is an adhesive having good thermal conductivity. As a result, in the invention of JP-A No. 2024-114439, heat of the respective battery cells can be transmitted to the battery case via the heat conductive material, and reduction in cooling efficiency of the respective battery cells can be suppressed.

When an internal pressure of a cell case increases, the cell case expands. At that time, a bottom portion of the cell case may be deformed toward an internal space side of the cell case. In that case, the heat conductive material may not follow deformation of at least one of the bottom portion of the cell case or the bottom portion of the battery case. In that case, the heat conductive material may be peeled off from at least one of the bottom portion of the cell case or the bottom portion of the battery case. When such a phenomenon occurs, reduction in the cooling efficiency of the battery cell cannot be suppressed.

### SUMMARY

In view of the above circumstances, it is an object of the present disclosure to provide a power storage device that can suppress reduction in cooling efficiency of a battery cell by using a heat conductive material provided between a first bottom portion of the battery cell and a second bottom portion of a battery case, even in a case in which a bottom portion of a cell case has been deformed toward an internal space side of the cell case.

### Means for Solving the Problem

A power storage device according to a first aspect includes: at least one battery cell that includes a cell case; a battery case that accommodates the at least one battery cell; and a heat conductive material that is adhered to a first bottom portion, which is a bottom portion of the cell case, and to a second bottom portion, which is a bottom portion of the battery case, and that has a Young's modulus that is smaller than a Young's modulus of the cell case, wherein the second bottom portion of the battery case includes a concavo-convex portion, and the heat conductive material is adhered to the concavo-convex portion.

In the power storage device of the first aspect, the concavo-convex portion that the heat conductive material contacts is formed at the second bottom portion of the battery case. Consequently, a specific surface area of the second bottom portion is increased. As a result, adhesive strength between the second bottom portion, at which the concavo-convex portion is formed, and the heat conductive material is improved. Accordingly, when the cell case expands due to internal pressure, even if the bottom portion of the cell case is deformed toward an internal space side of the cell case, the heat conductive material is unlikely to peel off from the member at which the concavo-convex portion is formed. Thus, even in a case in which the bottom portion of the cell case is deformed toward the internal space side of the cell case, reduction in cooling efficiency of the battery cell can be suppressed by utilizing the heat conductive material that is provided between the first bottom portion of the battery cell and the second bottom portion of the battery case.

A power storage device according to a second aspect is the power storage device according to the first aspect, wherein the concavo-convex portion includes plural ribs.

In the power storage device of the second aspect, adhesive strength between the second bottom portion of the battery case and the heat conductive material, as well as mechanical strength of the second bottom portion of the battery case, are improved due to the ribs.

A power storage device according to a third aspect is the power storage device according to the second aspect, wherein a shape of the first bottom portion when the cell case is viewed in an up-down direction is a rectangular shape having a pair of long sides and a pair of short sides, and the ribs extend along a direction that is parallel to the long sides.

In the power storage device of the third aspect, adhesive strength between the second bottom portion of the battery case and the heat conductive material can be improved due to the ribs.

A power storage device according to a fourth aspect is the power storage device according to the second aspect, wherein a shape of the first bottom portion when the cell case is viewed in an up-down direction is a rectangular shape having a pair of long sides and a pair of short sides, and the ribs extend along a direction that is parallel to the short sides.

In the power storage device of the fourth aspect, when the bottom portion of the cell case is deformed toward the internal space side of the cell case and the heat conductive material is deformed so as to follow this, the ribs are unlikely to inhibit the second bottom portion from deforming so as to follow the heat conductive material. As a result, as compared to a case in which deformation of the second bottom portion of the battery case is likely to be inhibited, the heat conductive material is less likely to be peeled off from the second bottom portion of the battery case.

A power storage device according to a fifth aspect is the power storage device according to the first aspect, wherein the concavo-convex portion includes a rough face.

According to the power storage device of the fifth aspect, since the specific surface area of the second bottom portion is increased due to the rough face, adhesive strength between the second bottom portion of the battery case and the heat conductive material can be improved.

A power storage device according to a sixth aspect is the power storage device according to any one of the first aspect to the fifth aspect, wherein a shape of the first bottom portion when the cell case is viewed in an up-down direction is a rectangular shape having a pair of long sides and a pair of short sides, the first bottom portion includes a first portion that is arranged at a central portion thereof in a direction that is parallel to the long sides, and a second portion that is arranged at at least one end portion side of the first portion in the direction that is parallel to the long sides, an exhaust valve that opens when an internal pressure of the battery cell increases is provided at the first portion, and the cell case is adhered to the heat conductive material at the second portion.

In the power storage device of the sixth aspect, the second portion of the first bottom portion, at which the exhaust valve is not provided, is adhered to the heat conductive material. That is to say, the first portion, at which the exhaust valve is provided, is not adhered to the heat conductive material. As a result, when the internal pressure of the battery cell increases and the exhaust valve opens, the exhaust valve and the heat conductive material are unlikely to interfere with each other. Accordingly, the exhaust valve can be configured to be easily opened.

Furthermore, the first portion of the first bottom portion, at which the exhaust valve is provided, is not adhered to the heat conductive material. As a result, adhesive strength between the first bottom portion and the second bottom portion via the heat conductive material is reduced as compared to a case in which an entire face of the first bottom portion is adhered to the heat conductive material. However, in the power storage device of the sixth aspect, the adhesive strength is improved by the concavo-convex portion. Accordingly, reduction in the adhesive strength between the first bottom portion and the second bottom portion via the heat conductive material can be suppressed.

A power storage device according to a seventh aspect is the power storage device according to the sixth aspect, wherein the second portion is respectively arranged at both end portion sides of the first portion in the direction that is parallel to the long sides.

In the power storage device of the sixth aspect, the second portion is respectively arranged at both end portion sides of the first portion in the direction that is parallel to the long sides. As a result, both end portion sides of the first bottom portion are adhered to the heat conductive material. Accordingly, adhesive strength between the first bottom portion and the heat conductive material can be improved.

As explained above, the power storage device according to the present disclosure has an excellent effect in that, even in a case in which the bottom portion of the cell case is deformed toward the internal space side of the cell case, reduction in cooling efficiency of the battery cell can be suppressed by utilizing the heat conductive material that is provided between the first bottom portion of the battery cell and the second bottom portion of the battery case.

### BRIEF DESCRIPTION OF THE DRAWINGS

Exemplary embodiments of the present invention will be described in detail based on the following figures, wherein:
FIG. 1 is a cross-sectional view taken at a vehicle width direction center of a vehicle at which a power storage device according to a first exemplary embodiment is mounted;
FIG. 2 is a schematic exploded perspective view of the power storage device;
FIG. 3 is a schematic exploded perspective view of a lower case of a battery case and a battery module;
FIG. 4 is a schematic front view of a battery cell, a heat conductive material, and a bottom plate of a lower case;
FIG. 5 is a schematic cross-sectional view viewed along arrows of line 5-5 in FIG. 4;
FIG. 6 is a schematic bottom view of the battery cell;
FIG. 7 is a schematic cross-sectional view viewed along the arrows of line 5-5 in FIG. 4 at a time when the battery cell has expanded;
FIG. 8 is a schematic exploded perspective view of a lower case of a battery case and a battery module according to a second exemplary embodiment; and
FIG. 9 is a schematic exploded perspective view of a lower case of a battery case and a battery module according to a third exemplary embodiment.

### DETAILED DESCRIPTION

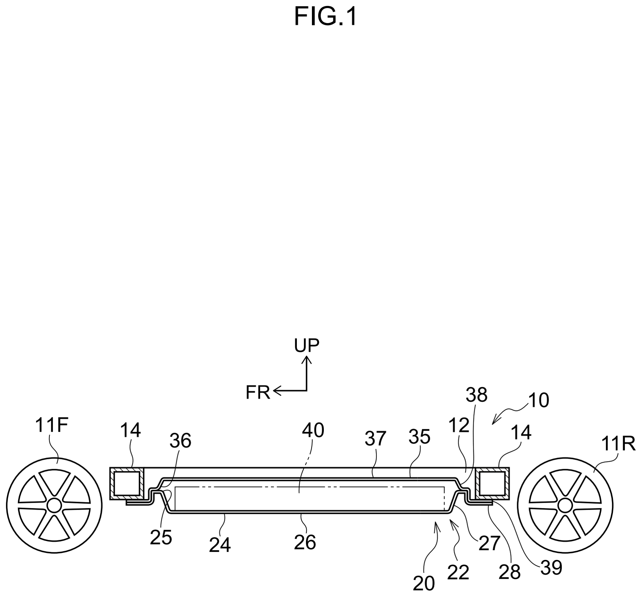

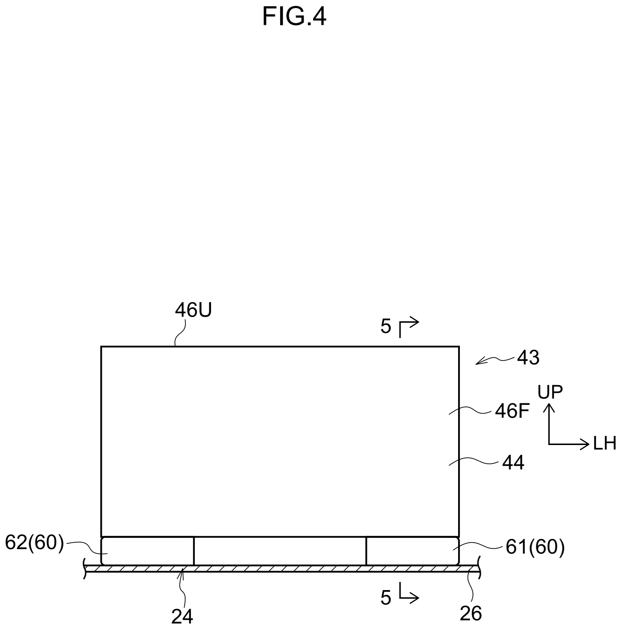

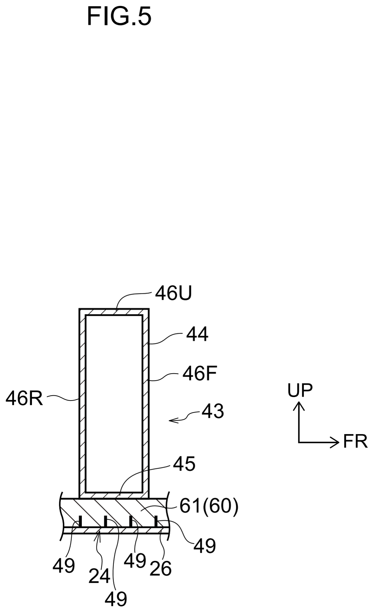

An exemplary embodiment of a vehicle upper portion structure according to the present disclosure will be explained below with reference to FIG. 1 to FIG. 9. It should be noted that arrow FR appropriately shown in the respective drawings indicates a vehicle frontward direction, which is a front side in a vehicle front-rear direction, arrow IN indicates an inner side direction in a vehicle width direction, and arrow UP indicates a vehicle upward direction, which is an upper side in a vehicle up-down direction. In the following explanation, in cases in which a "front-rear direction", a "width direction", and an "up-down direction" are simply referred to, these respectively indicate the vehicle front-rear direction, the vehicle width direction, and the vehicle up-down direction. Furthermore, a left-right direction means a left-right direction in a state of facing toward the vehicle frontward direction.

### (First Exemplary Embodiment)

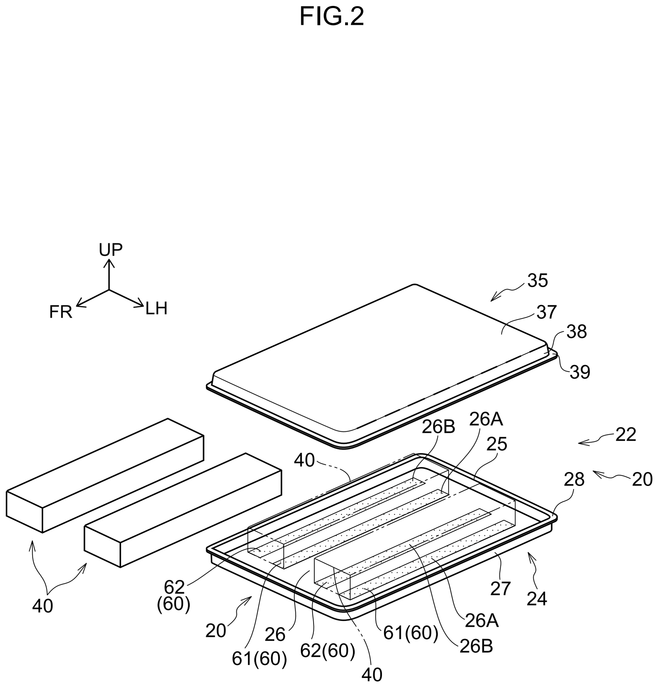

As shown in FIG. 1 and FIG. 2, a battery pack (power storage device) 20 of the present exemplary embodiment is mounted at a vehicle (electric motor vehicle) 10. The vehicle 10 of the present exemplary embodiment is an electric vehicle (battery electric vehicle (BEV)).

The vehicle 10 includes a left and right pair of front wheels 11F, a left and right pair of rear wheels 11R, a left and right pair of rockers 12, which are portions of a vehicle body frame member and extend in the vehicle front-rear direction, and a front and rear pair of cross members 14, which are portions of the vehicle body frame member that extend in the vehicle width direction (left-right direction) with both end portions thereof fixed to the left and right rockers 12.

A battery pack 20 of the present exemplary embodiment includes a battery case 22 and two battery modules 40. Power of the battery pack 20 (battery cell 43) is supplied to, for example, an electric motor (which is not illustrated in the drawings) that applies a driving force to the front wheels 11F and the rear wheels 11R.

As shown in FIG. 1 and FIG. 2, the battery case 22 includes a lower case 24 and an upper case 35.

The lower case 24 is a hollow body at which an opening portion 25 is formed at an upper face thereof. The lower case 24 includes a bottom plate portion (second bottom portion) 26, a peripheral wall portion 27, and an outer peripheral flange 28. A planar shape of the peripheral wall portion 27 is annular, and a lower end portion of the peripheral wall portion 27 is connected to an outer peripheral edge portion of the bottom plate portion 26. A planar shape of the outer peripheral flange 28 is annular, and an inner peripheral edge portion of the outer peripheral flange 28 is connected to an upper end portion of the peripheral wall portion 27.

The upper case 35 is a hollow body at which an opening portion 36 is formed at a lower face thereof. The upper case 35 includes a top plate portion 37, a peripheral wall portion 38, and an outer peripheral flange 39. A planar shape of the peripheral wall portion 38 is annular, and an upper end portion of the peripheral wall portion 38 is connected to an outer peripheral edge portion of the top plate portion 37. A planar shape of the outer peripheral flange 39 is annular, and an inner peripheral edge portion of the outer peripheral flange 39 is connected to a lower end portion of the peripheral wall portion 38.

As shown in FIG. 2, the two battery modules 40 are provided at an interior of the lower case 24. The battery modules 40 are arranged side by side in the left-right direction. The battery modules 40 are mounted at the bottom plate portion 26 of the lower case 24.

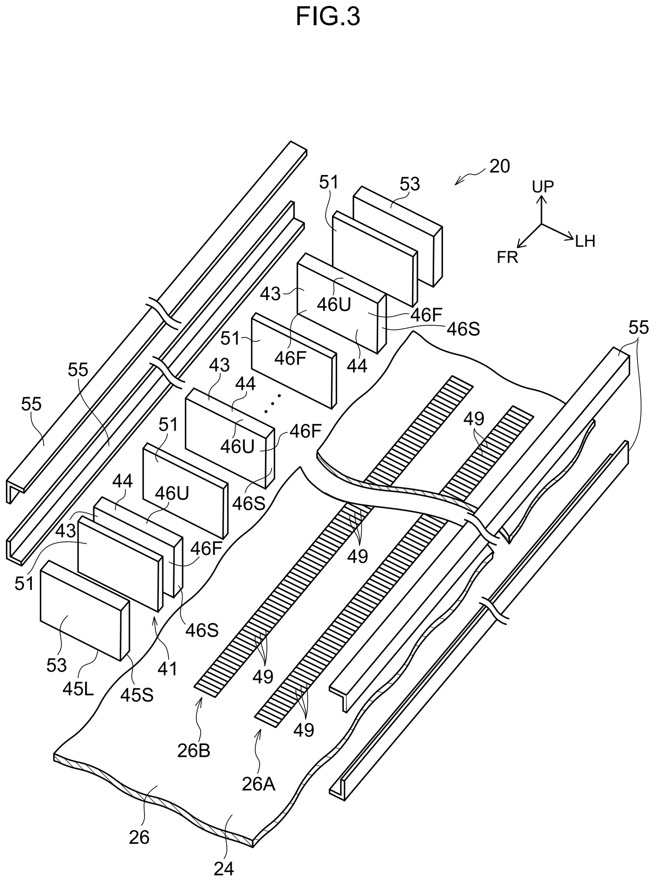

As shown in FIG. 3, each battery module 40 includes a battery stack 41, a pair of end plates 53, and four restraining members 55.

As shown in FIG. 3, the battery stack 41, which extends in the front-rear direction in plan view, includes plural battery cells 43, and plural insulating members 51 positioned between adjacent battery cells 43, immediately in front of a battery cell 43 positioned furthest frontward, and immediately behind a battery cell 43 positioned furthest rearward. It should be noted that, although only three battery cells 43 are illustrated in FIG. 3 for convenience, in practice, the battery stack 41 includes more than three battery cells 43. Metal cell cases 44 configuring outer shapes of the battery cells 43, which are lithium-ion batteries, each have a rectangular parallelepiped shape. At an interior of each cell case 44, for example, an internal electrode (current collection terminal), an electrolytic solution, and a gas are present.

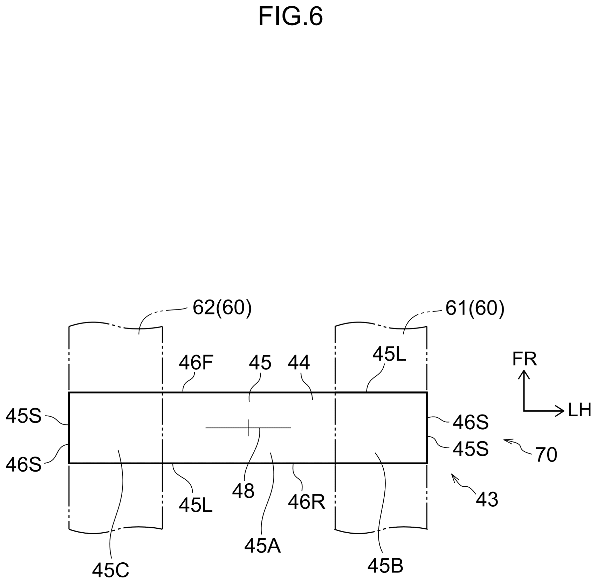

A bottom portion of the cell case 44 is configured by a bottom plate portion (first bottom portion) 45, and an upper face of the cell case 44 is configured by an upper plate portion 46U. Planar shapes of the bottom plate portion 45 and the upper plate portion 46U are rectangular shapes that are longer in the left-right direction than in the front-rear direction. That is to say, as shown in FIG. 6, an outer shape of the bottom plate portion 45 is configured by a pair of short sides 45S and a pair of long sides 45L. The short sides 45S are parallel to the front-rear direction, and the long sides 45L are parallel to the left-right direction. Front elevation shapes of a front plate portion 46F and a rear plate portion 46R of the cell case 44 are the same as each other. The front elevation shapes of the front plate portion 46F and the rear plate portion 46R are rectangular shapes that are longer in the left-right direction than in the up-down direction. A positive electrode and a negative electrode (neither of which are illustrated in the drawings) are provided at left and right side plate portions 46S of the cell case 44.

As shown in FIG. 6, an exhaust valve 48 is provided at a left-right direction central portion (first portion) 45A of the bottom plate portion 45 of the cell case 44. The exhaust valve 48 is a +(plus)-shaped thin-walled portion. That is to say, a mechanical strength of the exhaust valve 48 is lower than that of portions of the bottom plate portion 45 other than the exhaust valve 48. For example, when an internal pressure of the cell case 44 reaches a predetermined value due to the occurrence of an internal short circuit in the battery cell 43, the exhaust valve 48 is broken. That is to say, the exhaust valve 48 is opened.

As shown in FIG. 3, each battery module 40 includes a front and rear pair of end plates 53. An end plate 53 at a front side is positioned immediately in front of an insulating member 51 at a front-most side, and an end plate 53 at a rear side is positioned immediately behind an insulating member 51 at a rear-most side.

As shown in FIG. 3, each of the four restraining members 55 extends in the front-rear direction and has a substantially L-shaped cross-sectional shape. The restraining members 55 are fixed to the front and rear end plates 53 while covering four corners of the battery cells 43 (the cell cases 44) and the end plates 53, respectively. As a result, front-rear lengths of the restraining members 55 become shorter than in a free state. That is to say, the front and rear end plates 53 are pulled toward each other by the restraining members 55, whereby the front and rear end plates 53 sandwich the battery stack 41 from the front and rear. In this manner, the battery stack 41 and the end plates 53 are integrated by the restraining members 55 at the left and right. That is to say, the battery module 40 including the battery stack 41, the pair of end plates 53, and the four restraining members 55 is completed.

Furthermore, the battery module 40 includes plural bus bars (which are not illustrated in the drawings) that are connected to the positive electrodes and the negative electrodes of the battery cells 43, and a cooler (which is not illustrated in the drawings).

As shown in FIG. 2 and FIG. 3, the battery modules 40 are accommodated at the interior of the lower case 24, and each battery module 40 is fixed to the bottom plate portion 26. At an upper face of the bottom plate portion 26, there are two regions 26A and 26B in which ribs 49 are provided. The two regions 26A and 26B extend in the front-rear direction and are separated from each other. Plural ribs (concavo-convex portions) 49 extending along the left-right direction are provided so as to project upward in each region 26A and each region 26B of the bottom plate portion 26 of the lower case 24. That is to say, each rib 49 extends parallel to the long sides 45L of the bottom plate portions 45. The ribs 49 are arranged side by side in the vehicle front-rear direction at predetermined intervals.

Furthermore, although not shown in FIG. 3, a heat conductive material 60 is applied to an entire region of each of the regions 26A and 26B. Specifically, a first heat conductive portion 61 is applied to an entirety of each region 26A, and a second heat conductive portion 62 is applied to an entirety of each region 26B. That is to say, the heat conductive material 60 includes the first heat conductive portion 61 at a left side, which is applied to the region 26A, and the second heat conductive portion 62 at a right side, which is applied to the region 26B. A thermal conductivity of the heat conductive material 60 is high. That is to say, the thermal conductivity of the heat conductive material 60 is higher than thermal conductivities of the bottom plate portion 26, the cell cases 44, and the insulating members 51. The heat conductive material 60 has a Young's modulus that is smaller than that of the cell cases 44.

As shown with imaginary lines in FIG. 2, the bottom portion of the battery module 40 at the left side is placed in the region 26A, and the bottom portion of the battery module 40 at the right side is placed in the region 26B. As a result, as shown in FIG. 6, the first heat conductive portion 61 contacts a left side portion (second portion) 45B of the bottom plate portion 45 of the cell case 44 of each battery cell 43, and the second heat conductive portion 62 contacts a right side portion (second portion) 45C of the bottom plate portion 45 of the cell case 44 of each battery cell 43. In other words, the exhaust valve 48 of each bottom plate portion 45 does not contact the first heat conductive portion 61 and the second heat conductive portion 62. In this manner, in the bottom plate portion 45, the left side portion 45B and the right side portion 45C, which are both end portions in a direction parallel to the long sides 45L, are adhered to the heat conductive material 60. The left side portion 45B and the right side portion 45C are provided at end portion sides with respect to the central portion 45A. When the respective heat conductive materials 60 solidify, the respective battery modules 40 are fixed to the respective regions 26A and 26B by the first heat conductive portions 61 and the second heat conductive portions 62. The solidified heat conductive materials 60 can be elastically deformed to a certain extent.

Furthermore, the end plates 53 of the respective battery modules 40 are fixed to the bottom plate portion 26 via metal brackets (which are not illustrated in the drawings).

Moreover, the outer peripheral flange 39 of the upper case 35 is placed on an entirety of an upper face of the outer peripheral flange 28 of the lower case 24, in which the two battery modules 40 have been accommodated, via a sealing material (which is not shown in the drawings), and the outer peripheral flange 28 and the outer peripheral flange 39 are fixed to each other. As a result, the battery pack 20 is completed.

Furthermore, as shown in FIG. 1, the battery case 22 of the completed battery pack 20 is supported by the rockers 12 and the cross members 14. That is to say, in a state in which the top plate portion 37 and the peripheral wall portion 38 of the upper case 35 are positioned in a space surrounded by the rockers 12 and the cross members 14, the outer peripheral flange 39 is fixed to lower faces of the respective rockers 12 and the respective cross members 14.

According to the present exemplary embodiment, the following operational effects are exerted.

For example, when the respective battery cells 43 of the respective battery modules 40 are supplying power to the electric motor, cooling efficiencies of the respective battery cells 43 may be reduced. A portion of heat of the respective battery cells 43 is transmitted from both left and right side portions of the bottom plate portions 45 of the cell cases 44 to the bottom plate portion 26 of the lower case 24 via the first heat conductive portions 61 and the second heat conductive portions 62. Due to the first heat conductive portions 61 and the second heat conductive portions 62 dissipating heat of the battery cells 43 to the bottom plate portion 26 in this manner, the respective battery cells 43 are prevented from reaching excessively high temperatures.

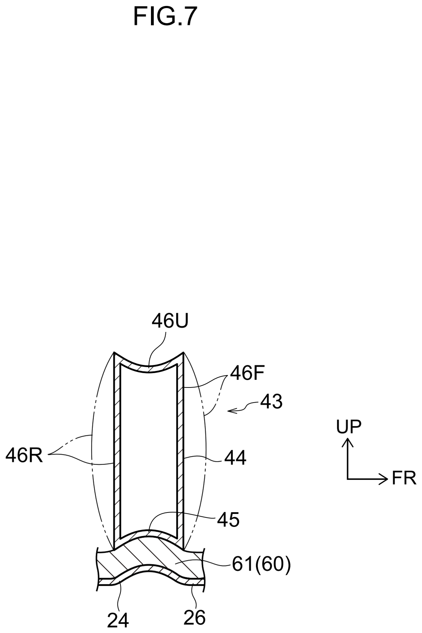

Incidentally, when an internal short circuit occurs in any of the battery cells 43 of either of the battery modules 40, an internal pressure of the cell case 44 increases, and the front plate portion 46F and the rear plate portion 46R may expand toward outer sides as shown with imaginary lines in FIG. 7. In that case, due to the expansion of the front plate portion 46F and the rear plate portion 46R, the bottom plate portion 45 and the upper plate portion 46U may be deformed so as to be recessed toward an internal space side of the cell case 44. That is to say, the bottom plate portion 45 may be deformed so that a portion between the pair of long sides 45L of the bottom plate portion 45 is displaced upward. In a case in which the bottom plate portion 45 is deformed so as to be recessed toward the internal space side of the cell case 44, the first heat conductive portion 61, which contacts the bottom plate portions 45 of the cell cases 44 of the respective battery cells 43, is bent so as to be convex upward as shown in FIG. 7. Furthermore, although not illustrated in the drawings, in a similar manner, the second heat conductive portion 62, which contacts the bottom plate portions 45 of the cell cases 44 of the respective battery cells 43, is bent and deformed so as to be convex upward accompanying the deformation of the bottom plate portion 45.

In the present exemplary embodiment, the ribs 49 are provided in the region 26A of the bottom plate portion 26 to which the first heat conductive portion 61 is fixed and the region 26B to which the second heat conductive portion 62 is fixed. As a result, adhesive strength between the first heat conductive portion 61 and the bottom plate portion 26 and adhesive strength between the second heat conductive portion 62 and the bottom plate portion 26 are greater than in a case in which an entire upper face of the bottom plate portion 26 is a flat face. Accordingly, even if the first heat conductive portion 61 and the second heat conductive portion 62 are deformed, the bottom plate portion 26 of the lower case 24 is also bent so as to be convex following the deformation of the first heat conductive portion 61 and the second heat conductive portion 62. Thus, even if the bottom plate portions 45 of the cell cases 44 of the respective battery cells 43 are deformed toward the internal space sides of the cell cases 44, the bottom plate portion 26 of the lower case 24 and the heat conductive material 60 are unlikely to be peeled apart. Therefore, even in a case in which the bottom plate portion 45 of the cell case 44 is deformed toward the internal space side of the cell case 44, reduction in cooling efficiencies of the respective battery cells 43 can be suppressed by utilizing the heat conductive material 60 that is provided between the bottom plate portions 45 of the battery cells 43 and the bottom plate portion 26 of the lower case 24.

Further, in the present exemplary embodiment, since the ribs 49 are provided at the bottom plate portion 26, mechanical strength of the bottom plate portion 26 of the lower case 24 is higher than that in a case in which the entire upper face of the bottom plate portion 26 is a flat face. Accordingly, the bottom plate portion 26 of the lower case 24 can be made less likely to be damaged.

Furthermore, in the present exemplary embodiment, as viewed from the up-down direction, the ribs 49 and the heat conductive material 60 are provided so as not to overlap with the exhaust valve 48. As a result, when the internal pressure of the cell case 44 of the battery cell 43 reaches a predetermined value and the exhaust valve 48 is opened, it is unlikely that the ribs 49 and the heat conductive material 60, and the exhaust valve 48, will interfere with each other. Accordingly, the exhaust valve can be smoothly opened to smoothly discharge internal matter (debris) at the interior of the cell case 44 to the exterior of the battery cell 43 via the exhaust valve 48.

Further, in the present exemplary embodiment, within each bottom plate portion 45, the left side portion 45B and the right side portion 45C, at which the exhaust valve 48 is not provided, are adhered to the heat conductive material 60. That is to say, the central portion 45A, at which the exhaust valve 48 is provided, is not adhered to the heat conductive material 60. As a result, when the internal pressure of the battery cell 43 increases and the exhaust valve 48 opens, the exhaust valve 48 and the heat conductive material 60 are unlikely to interfere with each other. Accordingly, the exhaust valve 48 can be configured to be easily opened.

Furthermore, in the present exemplary embodiment, within each bottom plate portion 45, the central portion 45A, at which the exhaust valve 48 is provided, is not adhered to the heat conductive material 60. As a result, adhesive strength between the bottom plate portion 45 and the bottom plate portion 26 via the heat conductive material 60 is reduced as compared to a case in which an entire face of the bottom plate portion 45 is adhered to the heat conductive material 60. However, in the battery pack 20 of the present exemplary embodiment, as described above, the adhesive strength is improved by the ribs 49. Accordingly, reduction in the adhesive strength between the bottom plate portion 45 and the bottom plate portion 26 via the heat conductive material 60 can be suppressed.

Further, in the present exemplary embodiment, the left side portion 45B and the right side portion 45C are respectively arranged at both end portion sides of the central portion 45A in the direction parallel to the long sides 45L. As a result, both end portion sides of the bottom plate portion 45 are adhered to the heat conductive material 60. Accordingly, the adhesive strength between the bottom plate portion 45 and the heat conductive material 60 can be improved.

### (Second Exemplary Embodiment)

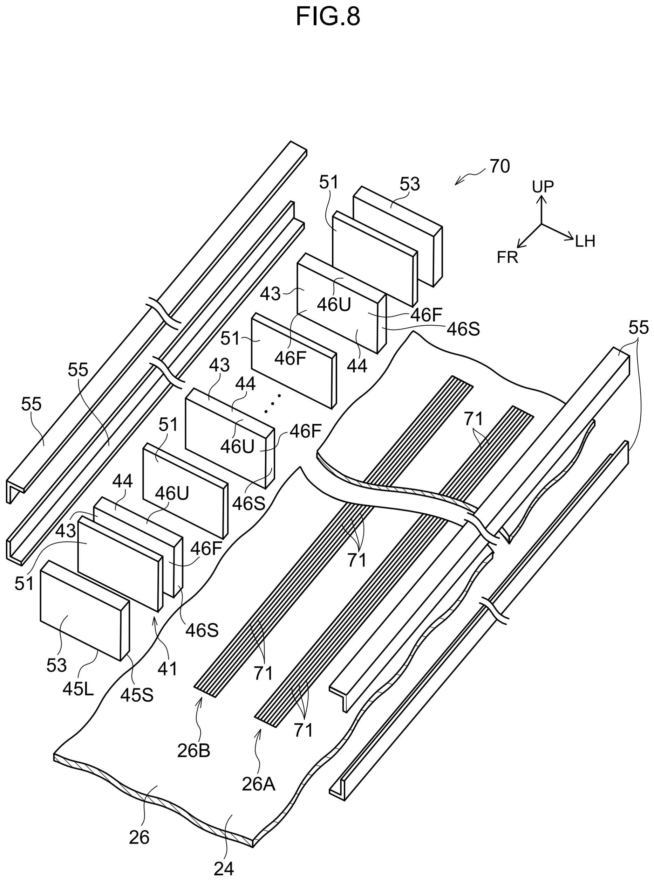

Next, a battery pack according to a second exemplary embodiment of the present disclosure will be explained with reference to FIG. 8. It should be noted that, in the present exemplary embodiment, a shape of the ribs is different from that of the first exemplary embodiment. Members that are identical to those in the first exemplary embodiment are denoted by identical reference numerals, and a detailed explanation thereof will be omitted.

Plural ribs 71 of a battery pack 70 according to the present exemplary embodiment are provided so as to project toward the upper side from the upper face of the bottom plate portion 26. In plan view, the respective ribs 71 extend parallel to the short sides 45S of the bottom plate portions 45 of the cell cases 44. That is to say, the respective ribs 71 extend along the vehicle front-rear direction. The ribs 71 are provided in the regions 26A and the regions 26B. As is apparent from FIG. 8, the ribs 71 at the left and the right are provided at the bottom plate portion 26 so as to avoid the exhaust valves 48.

Furthermore, although not illustrated in FIG. 8, the heat conductive material 60 is applied to the entire region of the regions 26A and 26B in which the ribs 71 are provided. Specifically, the first heat conductive portions 61 are applied to entireties of the regions 26A, and the second heat conductive portions 62 are applied to entireties of the regions 26B. When the respective heat conductive materials 60 solidify, the respective battery modules 40 are fixed to the respective regions 26A and 26B by the first heat conductive portions 61 and the second heat conductive portions 62. The solidified heat conductive materials 60 can be elastically deformed to a certain extent.

According to the present exemplary embodiment, the following operational effects are exerted.

In the present exemplary embodiment, when the bottom plate portion 45 of the cell case 44 is deformed toward the internal space side of the cell case 44 and the heat conductive material 60 (the first heat conductive portion 61 and the second heat conductive portion 62) is deformed so as to follow this, the ribs 71 are unlikely to inhibit the bottom plate portion 26 of the lower case 24 from deforming so as to follow the heat conductive material 60. As a result, as compared to a case in which deformation of the bottom plate portion 26 of the lower case 24 is likely to be inhibited, the heat conductive material 60 is less likely to be peeled off from the bottom plate portion 26 of the lower case 24.

### (Third Exemplary Embodiment)

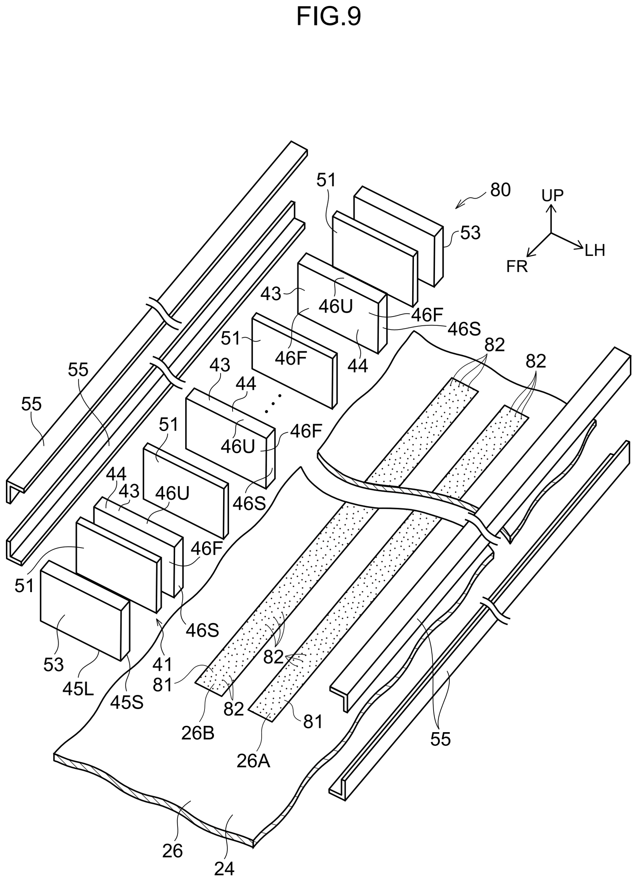

Next, a battery pack according to a third exemplary embodiment of the present disclosure will be explained with reference to FIG. 9. It should be noted that the present exemplary embodiment is different from the first exemplary embodiment in that rough faces (concavo-convex portions) 81 are provided in place of the ribs in the regions 26A and the regions 26B of the lower case 24. Members that are identical to those in the first exemplary embodiment are denoted by identical reference numerals, and a detailed explanation thereof will be omitted.

In the battery pack 80 according to the present exemplary embodiment, as shown in FIG. 9, rough faces 81 are formed in entireties of the respective regions 26A and entireties of the respective regions 26B of the bottom plate portion 26 of the lower case 24. That is to say, numerous concavities and convexities 82 are formed in the respective regions 26A and the respective regions 26B. The rough faces 81 are configured by these numerous concavities and convexities 82.

Furthermore, although not illustrated in FIG. 9, the heat conductive material 60 is applied to the entire region of the regions 26A and 26B in which the rough faces 81 are provided. Specifically, the first heat conductive portions 61 are applied to entireties of the regions 26A, and the second heat conductive portions 62 are applied to entireties of the regions 26B. When the respective heat conductive materials 60 solidify, the respective battery modules 40 are fixed to the respective regions 26A and 26B by the first heat conductive portions 61 and the second heat conductive portions 62. The solidified heat conductive materials 60 can be elastically deformed to a certain extent.

According to the present exemplary embodiment, the following operational effects are exerted.

According to the present exemplary embodiment, since a specific surface area of the bottom plate portion 26 (specifically, the regions 26A and the regions 26B) is increased by the rough faces 81, the adhesive strength between the bottom plate portion 26 of the lower case 24 and the heat conductive material 60 can be improved. Accordingly, the heat conductive material 60 is less likely to be peeled off from the bottom plate portion 26 of the lower case 24.

Although the power storage device according to the exemplary embodiments has been explained above, design modifications can be appropriately applied to the present disclosure within a range that does not depart from the gist thereof.

For example, although an example in which the heat conductive material 60 is attached to a portion of the bottom plate portion 45 of each cell case 44 (the right side portion and the left side portion in the vehicle width direction) has been explained in the above-described exemplary embodiments, the present disclosure is not limited thereto. For example, the heat conductive material 60 may be attached to an entirety of the bottom plate portion 45 of each cell case 44. In that case, the ribs or the rough faces provided at the bottom plate portion 26 of the lower case 24 are also provided in a region corresponding to an entirety of the bottom plate portion 45 of each cell case 44 (i.e., a region that abuts the heat conductive material 60). In other words, within the bottom plate portion 26 of the lower case 24, the ribs or rough faces are provided over an entirety of a region that overlaps with the cell cases 44 when viewed from the vehicle up-down direction. Furthermore, in a case in which the heat conductive material 60 is adhered to an entirety of the bottom plate portion 45 of each cell case 44, the exhaust valves 48 may be provided at portions other than the bottom plate portions 45 (for example, the upper plate portions 46U or the side plate portions 46S).

Further, for example, the battery pack may include three or more battery modules.

Furthermore, for example, the number of battery cells included in each battery module may be any number.

Further, for example, in place of the heat conductive material 60, a heat conductive material having a Young's modulus that is smaller than that of the cell cases, which is different from an adhesive, may be contacted with the bottom plate portions 45 of the cell cases 44 and the bottom plate portion 26 of the lower case 24.

Further, for example, a stacking direction of the respective battery cells in the battery pack (an extension direction of the battery modules) may be a direction that is different from the front-rear direction. Furthermore, a direction in which the battery modules are arranged side by side may be a direction that is different from the left-right direction.

Furthermore, for example, the vehicle may be an electric motor vehicle, which is different from the electric vehicle and which includes an electric motor that utilizes power of the battery pack. For example, the vehicle may be a hybrid vehicle (hybrid electric vehicle (HEV)) or a plug-in hybrid vehicle (plug-in hybrid electric vehicle (PHEV)).

## Claims

1. A power storage device comprising:
at least one battery cell that includes a cell case;
a battery case that accommodates the at least one battery cell; and
a heat conductive material that is adhered to a first bottom portion, which is a bottom portion of the cell case, and to a second bottom portion, which is a bottom portion of the battery case, and that has a Young's modulus that is smaller than a Young's modulus of the cell case,
wherein:
the second bottom portion of the battery case includes a concavo-convex portion, and
the heat conductive material is adhered to the concavo-convex portion.

2. The power storage device according to claim 1, wherein the concavo-convex portion includes a plurality of ribs.

3. The power storage device according to claim 2, wherein:
a shape of the first bottom portion when the cell case is viewed in an up-down direction is a rectangular shape having a pair of long sides and a pair of short sides, and
the ribs extend along a direction that is parallel to the long sides.

4. The power storage device according to claim 2, wherein:
a shape of the first bottom portion when the cell case is viewed in an up-down direction is a rectangular shape having a pair of long sides and a pair of short sides, and
the ribs extend along a direction that is parallel to the short sides.

5. The power storage device according to claim 1, wherein the concavo-convex portion includes a rough face.

6. The power storage device according to claim 1, wherein:
a shape of the first bottom portion when the cell case is viewed in an up-down direction is a rectangular shape having a pair of long sides and a pair of short sides,
the first bottom portion includes a first portion that is arranged at a central portion thereof in a direction that is parallel to the long sides, and a second portion that is arranged at at least one end portion side of the first portion in the direction that is parallel to the long sides,
an exhaust valve that opens when an internal pressure of the battery cell increases is provided at the first portion, and
the cell case is adhered to the heat conductive material at the second portion.

7. The power storage device according to claim 6, wherein the second portion is respectively arranged at both end portion sides of the first portion in the direction that is parallel to the long sides.
